# FASCICULE DE BREVET EUROPEEN

(11) **EP 1 977 589 B1**
(45) Date de publication et mention de la délivrance du brevet: **28.03.2012**
(21) Numéro de dépôt: 05849272.9
(22) Date de dépôt: 15.12.2005
(51) Int. Cl.: H04M 11/02, H04M 3/46

(54) **PROCEDE PERMETTANT LE TRANSFERT D' UN APPEL**
VERFAHREN ZUM TRANSFER EINES ANRUFS
METHOD FOR TRANSFERRING A CALL

(43) Date de publication de la demande: 08.10.2008
(73) Titulaire: Benoit, Daniel, 06200 Nice (FR)
(72) Inventeur: Benoit, Daniel, 06200 Nice (FR)
(86) Numéro de dépôt international: PCT/FR2005/003152
(87) Numéro de publication internationale: WO 2007/080232

(56) Documents cités:
- WO-A-92/22164
- WO-A-02/085019

## Description

La présente invention concerne un procédé permettant

le transfert d'un appel vers un destinataire, comprenant:
- la réception d'un appel par un dispositif de transfert d'appel,
- la consultation par ledit dispositif de transfert d'appel d'une liste de destinataires prédéfinis,
- la tentative d'appel par le dispositif de transfert d'appel du premier destinataire de la liste,
- la détection d'un éventuel signal de réponse,
- si aucun signal de réponse n'est détecté après un nombre de sonneries ou intervalles de temps prédéterminés,
- la tentative d'appel du deuxième destinataire de la liste, de sorte que le processus d'appel se poursuit jusqu'à l'obtention d'un signal de réponse.

De plus l'invention concerne un dispositif de transfert d'appel vers un destinataire, comprenant :
- un dispositif pour la réception d'un appel,
- ledit dispositif comporte une mémoire pour stocker une liste de destinataires prédéfinis,
- lequel dispositif de transfert d'appel est adapté pour tenter d'appeler un premier destinataire de la liste,
- ledit dispositif de transfert d'appel étant pourvu d'un moyen pour la détection d'un signal de réponse,
- et ledit dispositif de transfert d'appel étant adapté pour, en l'absence d'un signal de réponse, tenter d'appeler un deuxième destinataire de la liste, et pour poursuivre les tentatives d'appel jusqu'à l'obtention d'un signal de réponse,
et un système comportant un tel dispositif.

Le procédé, le dispositif et le système selon l'invention, sont particulièrement adaptés pour la protection d'un bien immobilier tel qu'un logement,
une habitation, des bureaux ou autres. En particulier, l'invention est adaptée pour être utilisée pour la communication d'une première personne, en un premier lieu, avec une deuxième personne qui se trouve en un deuxième lieu, de sorte que la première personne ait l'impression que son interlocuteur se trouve physiquement sur le lieu équipé du dispositif.

Un procédé selon l'introduction est connu du document W002085019. Ce document divulgue un dispositif de communication permettant de contrôler à distance l'accès à une habitation.

Selon un mode particulier de réalisation, ce système comprend un dispositif d'identification de type Parlophone, visiophone ou vidéophone, situé à l'extérieur de l'habitation, et un terminal de contrôle placé à l'intérieur du logement, ce dernier permettant, via des moyens de communication, de
mettre en relation un visiteur ayant actionné le dispositif d'identification avec un utilisateur
second, à distance. Une personne peut générer un appel vers le terminal de contrôle en appuyant sur une sonnette. Après avoir appuyé sur la touche
d'activation du dispositif d'identification. La communication est alors possible entre la personne
se trouvant devant le dispositif d'identification à l'extérieur de l'habitation et une personne se
trouvant à l'intérieur de l'habitation près du
terminal de contrôle. En cas d'absence de cette
personne à l'intérieur de l'habitation, le terminal de contrôle peut transmettre l'appel vers un moyen
de communication tel qu'un téléphone portable se trouvant à distance de ce terminal de contrôle.
Cette communication entre le terminal de contrôle et
ce dispositif est réalisée, par exemple, à l'aide d'un réseau de téléphonie mobile.

Cela signifie que le système pour contrôler l'accès vers l'habitation est opérationnel même si l'interlocuteur n'est pas sur place, près du terminal de contrôle.

Jusqu'à présent, lorsqu'un lieu est équipé d'un parlophone, d'un vidéophone ou d'un visiophone, l'utilisateur second ne peut répondre à un appel que s'il se trouve à l'intérieur de ce lieu. Ce système actuel permet déjà à l'utilisateur second qui se trouve dans ledit lieu, de savoir qui se présente à la porte, d'identifier cette personne, de dialoguer avec elle, éventuellement de la voir. IL existe également des appareils comportant un « transmetteur » capable d'alerter le propriétaire d'un lieu sur un téléphone portable ou fixe, en cas de tentative ou d'effraction des lieux équipés. Ce type de « transmetteur » peut aussi alerter directement en plus du propriétaire, une société de télésurveillance ou les services de police pour intervention qui aura lieu sous un certain délai.

Un autre système décrit dans le document WO 92/22164 procède à l'identification d'un appel entrant provenant d'un utilisateur à l'extérieur au moyen d'un parlophone, un visiophone ou un vidéophone, la consultation par un terminal de contrôle d'une liste de numéros d'appel correspondant à des destinataires possibles, l'appel du téléphone correspondant au premier numéro d'appel de la liste de numéros d'appel, et l'appel du numéro d'appel suivant de la liste de numéros d'appel en l'absence de réponse et ainsi de suite. Ce système ne résout pas le problème posé dans cette invention, à savoir que l'utilisateur qui se trouve à l'extérieur d'un lieu ait l'impression que son interlocuteur se trouve physiquement sur le lieu. En effet, dans ce document on ne se préoccupe pas de savoir si le destinataire de l'appel est dans les lieux puisqu'il est mentionné que le destinataire de l'appel entrant peut envoyer un message avertissant l'utilisateur qu'il n'est pas dans les lieux et qu'il doit appeler quelqu'un d'autre.

La présente invention diffère de ces systèmes existants en ce sens que le dispositif selon l'invention permet une véritable communication immédiate, audio ou audio-visuelle, mettant en oeuvre un système analogique ou numérique ou tout autre système adapté, entre l'utilisateur premier et l'utilisateur second alors même qu'une grande distance les sépare.

Selon WO02085019, il est prévu que le terminal de contrôle tente d'appeler un premier destinataire et un deuxième destinataire, si aucune réponse n'est obtenue. Les destinataires, que le terminal de contrôle peut contacter, sont prédéfinis dans une mémoire présente dans le terminal de contrôle.

Un désavantage important du système selon WO02085019 est qu'un visiteur, ayant activé le dispositif d'identification et ayant essayé d'entrer en contact avec son interlocuteur, soit connecté à une messagerie vocale. Certes, l'utilisateur peut laisser un message sur la messagerie vocale mais aucun contact n'est établi entre l'utilisateur à l'extérieur de l'habitation et un opérateur. L'utilisateur se trouvant à l'extérieur de l'habitation peut, par conséquent, constater l'absence de l'habitant. C'est pourquoi le système selon WO02085019 ne peut être utilisé pour la protection d'un bien immobilier.

En référence au système selon l'état de la technologie, le but de la présente invention est de proposer un dispositif qui permette et qui assure une connexion entre une personne qui se trouve en un premier lieu et une deuxième personne se trouvant à distance de cette première personne. Selon l'invention, un contact est établi, sans prendre le risque que l'utilisateur puisse tomber sur une messagerie vocale.

Ainsi, l'objet de la présente invention est un système pour le transfert d'appel vers un destinataire se trouvant dans un lieu fermé comprenant un moyen d'identification tel qu'un parlophone, un visiophone ou un vidéophone pour identifier un appel entrant provenant d'un utilisateur à l'extérieur actionnant le moyen d'identification, une mémoire pour mémoriser une liste de numéros d'appel correspondant à des destinataires possibles, un terminal de contrôle pour recevoir l'appel entrant et un moyen d'appel activé par le terminal de contrôle pour établir la communication entre l'utilisateur et le téléphone correspondant à un numéro d'appel de la liste de numéros d'appel. Le terminal de contrôle est un moyen de transfert d'appel comprenant un module identificateur adapté pour détecter l'envoi d'un signal spécifique consécutif à l'appui d'une touche par le destinataire correspondant au numéro d'appel et établir la communication entre l'utilisateur et le destinataire lorsque le module identificateur détecte le signal spécifique ou couper la connexion avec le téléphone du destinataire en l'absence de détection du signal spécifique et demander au moyen d'appel d'appeler le premier numéro d'appel de la liste de numéros d'appel ou le numéro d'appel suivant de cette liste.

Un autre objet de l'invention est un procédé de transfert d'appel vers un destinataire se trouvant dans un lieu fermé par un moyen de transfert d'appel comprenant les étapes suivantes
a) l'identification d'un appel entrant provenant d'un utilisateur à l'extérieur du lieu fermé au moyen d'un parlophone, un visiophone ou un vidéophone,
b) la consultation par le moyen de transfert d'appel d'une liste de numéros d'appel correspondant à des destinataires possibles,
c) l'appel du téléphone correspondant au premier numéro d'appel de la liste de numéros d'appel,
d) la réception par le moyen de transfert d'appel d'un signal spécifique consécutif à l'appui d'une touche par le destinataire correspondant à un numéro d'appel, et
e) l'établissement de la communication entre l'utilisateur et le destinataire correspondant au numéro d'appel après détection du signal spécifique par le moyen de transfert d'appel,
f) si ledit moyen de transfert ne détecte pas ledit signal spécifique, l'appel du numéro de téléphone correspondant au numéro d'appel suivant de ladite liste de numéros d'appel et la mise en oeuvre des étapes d), e) et f).

Considérant le fait que le procédé selon l'invention offre la possibilité de contrôler le signal de réponse et de poursuivre, le cas échéant, le processus de tentative d'appel vers d'autres destinataires, issus d'une liste de destinataires prédéfinis via le dispositif dé transfert d'appel, en cas d'absence d'un signal résultant d'une action du destinataire, le risque qu'un utilisateur, souhaitant contacter un destinataire tombe sur une messagerie vocale, est évité. Le contrôle du signal de réponse permet, selon l'invention, de différencier un signal émis par une messagerie vocale telle qu'un répondeur, une boite vocale ou autre, du signal réponse résultant d'une action d'un destinataire.

Les raisons pour lesquelles l'appelant est susceptible de tomber sur une messagerie vocale sont variées. Dans le cas d'un téléphone mobile (ou cellulaire), on peut identifier les causes suivantes :
- téléphone éteint,
- absence de réseau (hors zone de couverture, réseau encombré),
- mise en route du téléphone et procédure de vérification SIM,
- messagerie vocale se déclenchant suite à un nombre prédéfini de sonneries.
- numéro occupé,

Dans le cas d'un téléphone fixe, le fait de tomber sur une messagerie vocale peut être dû à :
- un numéro occupé,
- une absence de l'utilisateur.

Selon l'invention, le procédé est adapté pour que le signal de réponse résultant d'une action du destinataire soit un signal DTMF.

Cela signifie que le système du signal peut identifier le fait qu'un destinataire a tapé sur une touche de son portable. Ladite touche émet un signal de type DTMF, ce qui permet d'identifier le signal de réponse.

Selon l'invention, il est possible que ledit dispositif d'identification soit un parlophone.

Alternativement, il est possible que ledit dispositif d'identification soit un visiophone ou un vidéophone.

La présence d'un parlophone ou d'un vidéophone permet la communication d'une première partie avec une deuxième partie à distance.

Selon l'invention, il est possible que le dispositif d'identification comporte un capteur pour détecter la présence de ladite première personne à un endroit prédéterminé, ledit capteur étant adapté pour stopper le processus de poursuite d'appels en cas d'absence de ladite personne.

En pratique, il est possible qu'un utilisateur ait activé le système selon l'invention. Après un certain temps, le visiteur peut s'en aller. Pour éviter que le système ne poursuive le processus de tentatives d'appels vers d'autres destinataires prédéfinis, le système permet d'identifier l'absence de l'utilisateur et de stopper, en son absence, le processus d'appel d'un des destinataires sur la liste des destinataires prédéfinis. Ce processus de détection d'absence peut être réalisé grâce à un capteur vidéo pré intégré ou non, ou encore grâce à un détecteur de mouvement pré intégré ou non. D'autres moyens peuvent être utilisés aux mêmes fins. Plus précisément, l'absence du visiteur se traduit par une absence de mouvement détectée par le capteur vidéo ou le détecteur de mouvement, ce qui entraîne l'arrêt du processus de poursuite d'appel.

Selon l'invention, il est possible que le dispositif pour le transfert d'un appel vers un destinataire comprenne des moyens permettant de modifier, à distance, la liste de destinataires prédéfinis.

Cela permet d'éviter que quelqu'un soit obligé d'être sur place pour adapter ladite liste de destinataires.

Selon l'invention, il est possible que le système soit lié à la serrure d'une porte, dans lequel la mise en route du dispositif, pour le transfert d'un appel vers un destinataire, est relié à la fermeture de la serrure de la porte.

Avantageusement, la mise en route du dispositif est activée par l'engagement du penne d'une serrure, électrique ou non, de la gâche.

Préférentiellement, la serrure est électrique.

Cela signifie que, dès que quelqu'un quitte une habitation pourvue du système selon l'invention, en fermant la porte, la personne met automatiquement en route le dispositif.

Selon l'invention, il est possible que le système soit pourvu d'un moyen pour visualiser l'activation du système. Le fait qu'il existe des moyens permettant de vérifier que le dispositif est actif, permet de renseigner l'habitant sur le statut du dispositif de contrôle, à savoir si ce dernier est en fonctionnement ou non.

Le but, objet, et caractéristiques de l'invention apparaîtront plus clairement à la lecture de la description qui suit, faite en référence aux dessins dans lesquels un schéma fonctionnel du système pour le transfert d'un appel vers un destinataire.
La figure 1 représente un vue d'ensemble du système.
La figure 2 représente un schéma fonctionnel plus détaillé d'une partie du système selon la figure 1.
La figure 3 représente un schéma détaillé du dispositif de contrôle.
La figure 4 représente un processus d'appel au parlophone extérieur via le dispositif de contrôle, pour lequel les trois premiers numéros sont momentanément indisponibles.

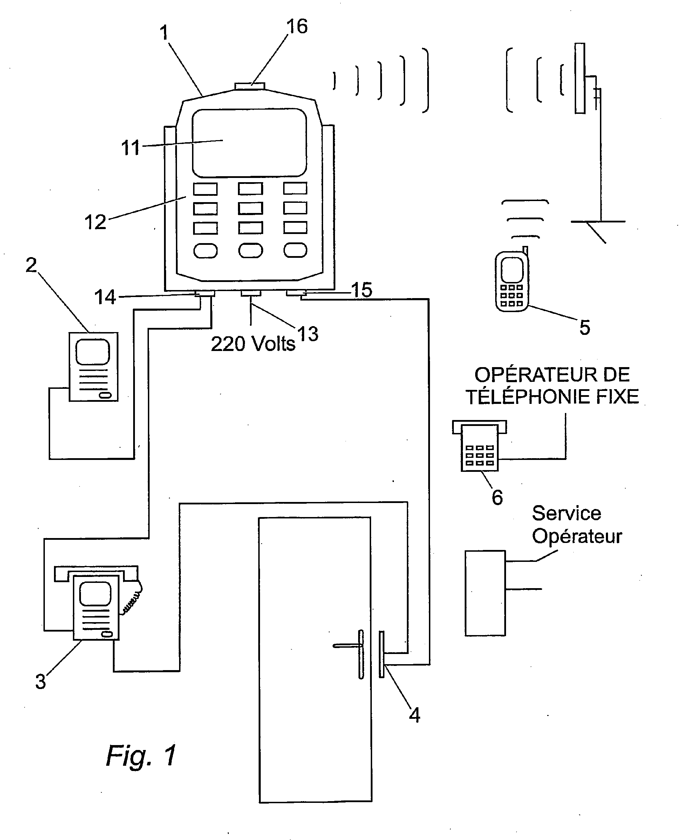

Comme mentionné précédemment, la figure 1 représente une vue d'ensemble du système.

Le dispositif de transfert d'appel 1 est installé à l'intérieur de l'habitation et est raccordé aux moyens d'identification 2, de type parlophone, visiophone, vidéophone ou autres. Préférentiellement ce moyen d'identification préexiste, mais il est tout à fait concevable que l'installation du dispositif de contrôle 1 entraîne l'aménagement de l'habitation, de sorte qu'un moyen d'identification 2 précité soit installé afin de permettre le fonctionnement global du système dans son intégralité. Suivant un mode de réalisation préféré, comme représenté sur la figure 1, le dispositif de transfert d'appel 1, dont la coque et le logo de la marque pourront avoir un design particulier, comporte, vu de l'extérieur :
- un écran luminescent 11, correspondant au système GSM ou un écran correspondant au système avec vidéo UMTS ou EDGE,
- un clavier numérique luminescent 12, comportant au moins 12 touches : 1, 2, 3, 4, 5, 6, 7, 8, 9, 0, *, +, #, + lettres alphabétiques,
- quatre touches ayant chacune une ou des fonctions précises (on, off, menu, avance, recul, effacement),
- une prise pour le bloc d'alimentation 13 (secteur - 220V),
- une prise pour liaison 14, notamment câblée, avec le parlophone, le vidéophone ou le visiophone intérieur 3 du domicile,
- le cas échéant, une prise pour liaison câblée 15 avec la gâche électrique 4 de la porte d'entrée principale du domicile,
- accessoirement, une prise pour liaison avec les autres gâches électriques du domicile, porte de service, garage, etc...,
- un capteur émetteur/récepteur 16 pour transmission sans fil (bluetooth ou wifi, etc...),
- un voyant à deux couleurs (verte et rouge, par exemple) pour indiquer que l'appareil est actif ou non, lequel voyant peut être disposé à la convenance sur un emplacement quelconque dudit dispositif de contrôle,
- un support prévu pour fixer l'appareil à côté du parlophone, vidéophone ou visiophone intérieur 3 du domicile, afin d'en rendre l'usage commode.

Ce dispositif de transfert d'appel comprend les platines électroniques et les composants nécessaires aux technologies utilisées visées ci-dessus. Il comporte également une platine pour la mise en place d'une carte à puce de type SIM indispensable à la liaison, en téléphonie mobile, obtenue par abonnement auprès des différents opérateurs connus tels que Orange, SFR, Bouygues, Télé2 pour la France ou d'autres opérateurs étrangers.

Il est bon de noter que la carte SIM fournie par l'opérateur peut être une carte « jumelle » de celle utilisée à titre principal, c'est-à-dire que le uméro d'appel de la carte insérée dans le dispositif de contrôle sera identique à celui du téléphone portable de l'utilisateur. Selon un autre mode de réalisation, les cartes SIM présentes dans le dispositif de transfert d'appel et dans le téléphone mobile de l'utilisateur 5, peuvent être différentes, ce qui signifie que les numéros d'appels seront également différents.

Le choix de l'une ou l'autre des deux solutions, dépendant de l'intérêt de l'utilisateur et/ou de l'opérateur.

Grâce à la prise pour liaison 14, le dispositif de transfert d'appels 1 peut être connecté à une installation préexistante, et notamment à un moyen d'identification extérieur 2 et/ou à un moyen d'identification intérieur 3, de type visiophone.

Il faut noter que toutes les liaisons entre les différents éléments précités peuvent être filaires ou sans fil. Par sans fil, on entend toutes les technologies de communication à distance permettant de s'affranchir de connectiques. A cet égard, on citera, à titre illustratif, les technologies GSM, UMTS, EDGE, BLUETOOTH, WIFI, AMPS, CDMA, CDMA 2000, WCDMA, la liste étant non exhaustive.

Lorsqu'un utilisateur actionne le moyen d'identification 2, le signal est transmis au dispositif de transfert d'appels. Dans un premier temps, si le dispositif de transfert d'appel est activé, il consulte une liste de destinataires préprogrammés, stockés dans une mémoire. Si ce dernier n'est pas activé, quelqu'un à l'intérieur de l'habitation peut répondre.

La liste de destinataires préprogrammés peut être une succession de numéros correspondant à différents destinataires respectifs, une liste de noms correspondant aux numéros desdits destinataires préprogrammés, ou encore tout chiffre ou symbole capable, après reconnaissance par le dispositif de transfert d'appels, d'aboutir à la tentative d'appels d'un destinataire.

L'appareil de transfert d'appels tente alors d'appeler le premier destinataire préprogrammé, une communication est alors établie entre ledit dispositif de transfert d'appels et le téléphone dudit premier destinataire, lequel téléphone peut être un téléphone fixe ou un téléphone mobile.

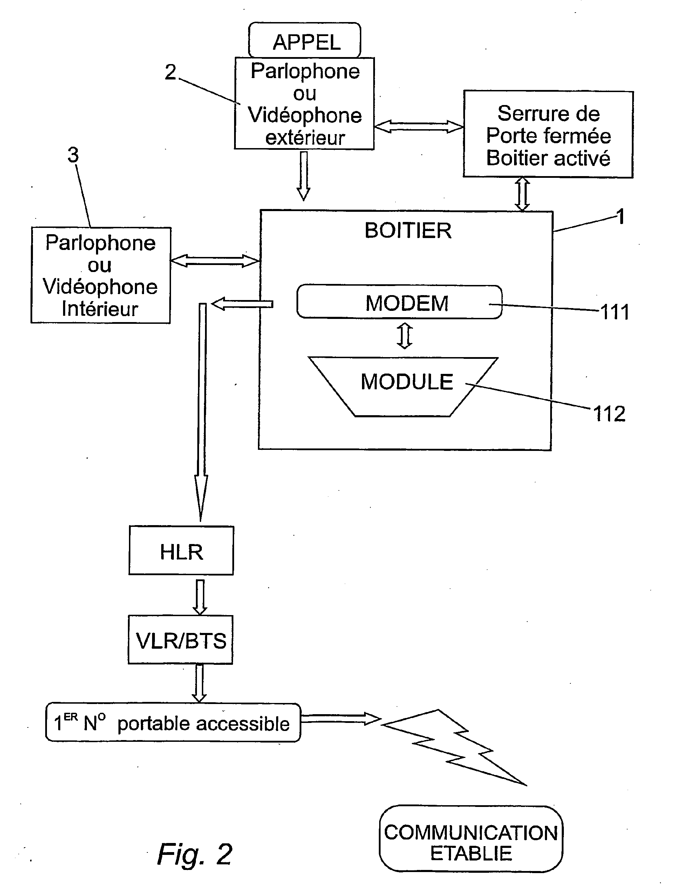

La figure 2 nous permet d'illustrer le système pour le transfert d'un appel vers un destinataire en possession d'un téléphone portable. Bien entendu, ce système ne fonctionne que si le dispositif de transfert d'appels est activé (position ON). Une première personne active le dispositif d'identification 2, le signal est alors transmis au dispositif de contrôle 1, lequel dispositif de contrôle 1 tente alors d'appeler le premier destinataire, à partir d'une liste de destinataires prédéfinis et stockés dans une mémoire dudit dispositif de transfert d'appels 1. La communication entre le dispositif de transfert d'appels 1 et le téléphone mobile dudit premier destinataire est établie grâce à des moyens de communication de type cellulaire.

Plus précisément le modem 111 tente d'appeler le premier destinataire, compose alors le premier numéro de portable correspondant au premier destinataire.

L'appel est alors transmis et il se présente au HLR (Home Location Register) qui interroge le dernier VLR (Visitor Location Register) qui lance un « avis de recherche » à toutes les BTS (Base Transceiver Station).

Dans ce cas de figure, la situation représentée est que le premier numéro de portable est accessible (allumé, en zone de couverture, libre). Le destinataire reçoit donc l'appel, décroche et la communication est établie entre la première personne ayant activé le dispositif d'identification et ledit destinataire.

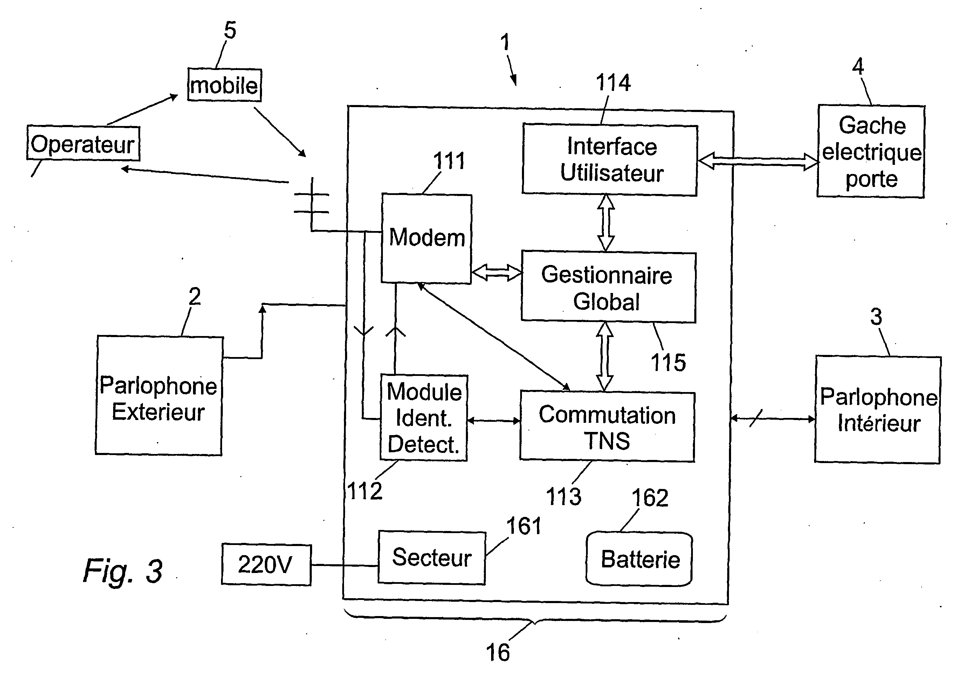

La figure 3 nous offre un schéma détaillé du dispositif de transfert d'appels 1. Ce dispositif de transfert d'appels 1 comprend un module identificateur détecteur 112, qui a pour fonction d'identifier le signal de réponse résultant d'une action du destinataire.

Ce signal de réponse est de type DTMF (Dual Tone Multi Frequency), qui est une des signalisations utilisées en téléphonie. Le DTMF consiste à combiner deux fréquences prises parmi cinq (700-900-1100-1300 et 1500 Hertz). Cette signalisation est utilisée notamment lorsque l'on effectue une numérotation. Le standard DTMF étant une combinaison d'une paire de fréquence propre à chacune des seize tonalités définies, permet d'attribuer à chacune des touches un signal unique et spécifique. Ce système DTMF peut être utilisée, entre autre, pour piloter un ordinateur à distance ou pour synchroniser le départ d'un feu d'artifices avec une bande son.

Le signal DTMF, résultant de l'appui sur une touche par le destinataire, est donc identifiable par le module identificateur 12 et différenciable d'un signal provenant d'une messagerie vocale. Plus précisément, l'identification étant différente, l'appui sur la touche « décroché » du téléphone du destinataire fera suivre la communication vers le modem 111, sinon le module détectant un signal émis par la messagerie vocale VMS, différent de celui résultant de l'appui d'une touche, coupera immédiatement la communication, le modem tentera alors d'appeler le deuxième destinataire prédéfini, le processus d'appels se poursuivant jusqu'à obtention d'un signal de réponse de type DTMF.

Le commutateur 113 permet de router le signal de parole en fonction du mode de fonctionnement du système. Si l'interface utilisateur 114 est activée, préférablement par action de la gâche électrique 4, le signal sera dirigé vers le modem 111 afin d'établir la communication avec les téléphones fixes ou mobiles du destinataire prédéfini.

Si l'interface utilisateur 114 n'est pas activée, le système fonctionnera de manière classique, c'est-à-dire que le parlophone extérieur 2 fonctionnera de manière conventionnelle (liaison directe entre le parlophone extérieur 2 et le parlophone intérieur 3).

Il est bon de noter que ce bloc permet également de traiter les différents signaux afin d'effectuer les conversions nécessaires (numériques - analogiques).

Le modem 111 permet d'établir une communication entre le dispositif d'identification 2 et le téléphone fixe ou mobile d'un destinataire prédéfini.

Il pourra être connecté au réseau téléphonique local (réseau téléphonique filaire).

Selon un mode préféré, il fonctionnera sur le réseau GSM et sera piloté grâce à un microcontrôleur qui lui fournira toutes les instructions nécessaires à son fonctionnement. Le modem 111 intégrera la carte SIM précitée que l'utilisateur se sera procuré auprès de l'un des opérateurs de téléphonie mobile.

L'interface utilisateur 114 sera adaptée pour dialoguer avec le système et le configurer à sa guise. A cet effet, un clavier numérique et un écran permettront de saisir les numéros de téléphone à contacter et d'activer ou de désactiver le système. Selon un mode préféré de l'invention, l'écran est de type LCD.

Le gestionnaire global 115 est au coeur du système. Son rôle est de coordonner les différents blocs de l'interface.

Le gestionnaire global assure le pilotage du modem. En cas d'activation du système, le microcontrôleur envoie des commandes en direction du modem, puis réceptionne et traite les informations en provenance de celui-ci. Le gestionnaire global 115 est également responsable du pilotage du commutateur 113, selon l'état d'activation ou de désactivation du système par l'utilisateur.

Le gestionnaire global est également adapté pour traiter et mémoriser des informations saisies par l'utilisateur au moyen de l'interface de commande et permet également l'affichage des données sur l'écran (écran LCD par exemple).

Le bloc d'alimentation 16 comprend un transformateur 161 et une batterie rechargeable 162, ainsi que différents modules d'adaptation, destinés à la répartition des tensions d'alimentation pour chacun des équipements. Outre la répartition électrique entre les différents modules, ce bloc d'alimentation 16 aura pour fonction d'assurer la continuité d'alimentation même en cas de coupure sur le réseau EDF. Il est évidemment possible que le dispositif de transfert d'appels 1 soit directement relié au secteur et ne comprenne pas de batterie rechargeable 162.

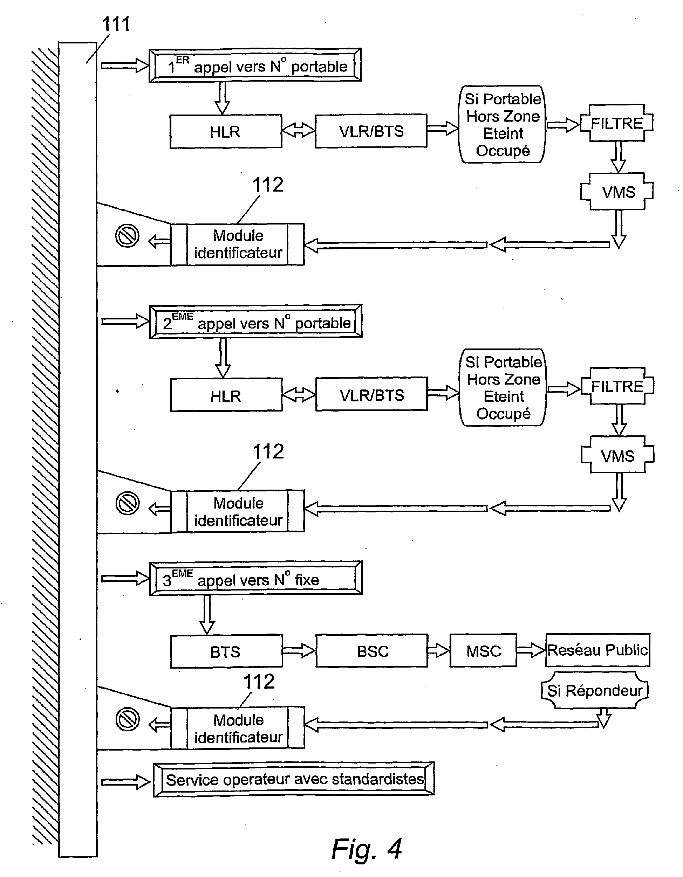

La figure 4 a pour but d'expliciter, de manière plus détaillée, un processus d'appels selon l'invention, déclenché par l'activation du moyen d'identification extérieur 2, pour lequel les trois premiers destinataires prédéfinis sont injoignables. Cette figure 4 a pour but d'expliquer une des spécificités de ce système de transfert d'appels, à savoir le fait que le dispositif de transfert d'appels, via le module identificateur, est capable de différencier le signal de réponse résultant d'une action du destinataire (signal DTMF) du signal émis par une messagerie vocale.

Cette caractéristique permet d'éviter que la personne qui active le dispositif d'identification, de type parlophone, visiophone ou vidéophone, ne tombe sur une messagerie vocale.

En effet, ceci serait contraire à un des résultats recherchés par la présente invention, à savoir le fait que la personne qui a activé le dispositif d'identification 2 ait l'impression qu'une personne soit présente à l'intérieur de l'habitation. Le modem 111 tente d'appeler le premier destinataire prédéfini, et compose donc le premier numéro correspondant au téléphone portable du premier destinataire. L'appel est transmis et se présente au HLR (Home Location Register) qui interroge le dernier VLR (Visitor Location Register), qui lance un « avis de recherche » à toutes les BTS (Base Transceiver Station).

Si le premier destinataire décroche, en appuyant par exemple sur l'une des touches du clavier numérique, un signal de réponse de type DTMF est émis en direction du module identificateur 112 et la communication est établie entre la personne ayant activé le dispositif d'identification 2 et le premier destinataire prédéfini, via le dispositif de transfert d'appels.

En revanche, comme représenté sur la figure 4, si le premier destinataire prédéfini ne répond pas, c'est-à-dire n'émet pas de signal de réponse de type DTMF, par exemple si le mobile est hors zone de couverture, éteint, en cours d'ouverture et de procédure de vérification SIM, occupé ou autre, l'appel est filtré par un programme informatique de l'opérateur, reconnu comme « appel renvoyé » et aboutit sur une messagerie vocale. Le module identificateur 112 reconnaît qu'il s'agit d'une messagerie vocale, de par la différence entre le signal présentement émis et celui qui résulterait d'une action du destinataire (signal DTMF résultant de l'appui d'une des touches).

Le module identificateur 112 coupe alors la ligne, demande au modem 111 de tenter d'appeler le deuxième destinataire prédéfini, c'est-à-dire de composer le deuxième numéro de portable prédéfini correspondant. Le modem 111 compose alors le deuxième numéro de téléphone portable correspondant au deuxième destinataire prédéfini. De façon similaire, l'appel est transmis et se présente au HLR qui interroge le dernier VLR qui lance un « avis de recherche » à tous les BTS, ce qui résulte, comme précédemment en ce que le module identificateur 12 reconnaît de nouveau qu'il s'agit d'une messagerie vocale, coupe la ligne en conséquence et impose au modem 111 de composer le troisième numéro correspondant au troisième destinataire prédéfini. Dans le présent cas d'espèce, le troisième numéro est un numéro de téléphone fixe.

Dans ce cas, le modem 111 compose ledit numéro, l'appel est transmis et se présente aux BTS, passe à travers le BSC (Base Station Controler) et arrive au MSC (Mobile Switch Center) qui, après vérification, transmet l'appel au réseau public.

Une fois encore, si aucun signal de réponse, de type DTMF, n'est détecté par le module identificateur 112, par exemple parce que le téléphone fixe est occupé ou que l'utilisateur est absent, dans un certain laps de temps, et/ou si, le cas échéant, une messagerie vocale se déclenche, un signal retour parvient de nouveau au module identificateur qui, détectant qu'il ne s'agit pas d'un signal de réponse résultant de l'action d'un destinataire (signal DTMF), coupe la ligne et demande au modem de composer un dernier numéro. Sur la figure 4, on peut constater que, selon un mode de réalisation de l'invention, le dernier numéro à composer peut être le numéro d'un service opérateur avec des standardistes et ceci pour éviter que la personne ayant préalablement activé le moyen d'identification 2 ne tombe, en tout état de cause, jamais sur une messagerie vocale.

## Revendications

1. Système pour le transfert d'appel vers un destinataire se trouvant dans un lieu fermé comprenant un moyen d'identification (2) tel qu'un parlophone, un visiophone ou un vidéophone pour identifier un appel entrant provenant d'un utilisateur à l'extérieur actionnant ledit moyen d'identification, une mémoire pour mémoriser une liste de numéros d'appel correspondant à des destinataires possibles, un terminal de contrôle (1) pour recevoir ledit appel entrant et un moyen d'appel (111) activé par ledit terminal de contrôle pour établir la communication entre ledit utilisateur et le téléphone correspondant à un numéro d'appel de ladite liste de numéros d'appel
ledit système étant **caractérisé en ce que** ledit terminal de contrôle est un moyen de transfert d'appel comprenant un module identificateur (112) adapté pour détecter l'envoi d'un signal spécifique consécutif à l'appui d'une touche par le destinataire correspondant audit numéro d'appel et établir la communication entre l'utilisateur et ledit destinataire lorsque ledit module identificateur détecte ledit signal spécifique ou couper la connexion avec le téléphone dudit destinataire en l'absence de détection dudit signal spécifique et demander audit moyen d'appel d'appeler le premier numéro d'appel de ladite liste de numéros d'appel ou le numéro d'appel suivant de cette liste.

2. Système selon la revendication 1, dans lequel ledit signal d'appel envoyé par le destinataire de l'appel transmis par ledit utilisateur est un signal DTMF, Dual Tone Multi Frequency, transmis par le téléphone dudit destinataire lorsqu'il appuie sur une des touches numériques dudit téléphone.

3. Système selon la revendication 1 ou 2, dans lequel ledit moyen d'appel (111) est un modem adapté pour être connecté à un réseau téléphonique cellulaire, notamment un réseau GSM.

4. Système selon l'une des revendications 1, 2 ou 3, dans lequel ledit moyen de transfert d'appel (1) comprend une interface utilisateur (114) qui, lorsqu'elle est activée, permet le transfert d'appel vers les numéros d'appel de ladite liste de numéros d'appel.

5. Système selon la revendication 4, dans lequel ledit moyen de transfert d'appel (1) comprend un commutateur (113) adapté pour commuter ledit signal d'appel vers ledit moyen d'appel (111) lorsque ladite interface utilisateur (114) est activée.

6. Système selon l'une des revendications 1 à 5, dans lequel ledit lieu fermé est une habitation et ledit moyen d'identification (2) est un parlophone, un visiophone, un vidéophone ou autre moyen équivalent.

7. Procédé de transfert d'appel vers un destinataire se trouvant dans un lieu fermé par un moyen de transfert d'appel comprenant les étapes suivantes :
a) l'identification d'un appel entrant provenant d'un utilisateur à l'extérieur dudit lieu fermé au moyen d'un parlophone, un visiophone ou un vidéophone,
b) la consultation par ledit moyen de transfert d'appel d'une liste de numéros d'appel correspondant à des destinataires possibles,
c) l'appel du téléphone correspondant au premier numéro d'appel de ladite liste de numéros d'appel;
ledit procédé étant **caractérisé en ce qu'**il comporte en outre les étapes suivantes :
d) la réception par ledit moyen de transfert d'appel d'un signal spécifique consécutif à l'appui d'une touche par le destinataire correspondant à un numéro d'appel, et
e) l'établissement de la communication entre ledit utilisateur et le destinataire correspondant audit numéro d'appel après détection dudit signal spécifique par ledit moyen de transfert d'appel,
f) si ledit moyen de transfert ne détecte pas ledit signal spécifique, l'appel du numéro de téléphone correspondant au numéro d'appel suivant de ladite liste de numéros d'appel et la mise en oeuvre des étapes d), e) et f).

## Claims

1. A system for transferring a call to a called party located in a closed place comprising an identification device (2) such as an audio or video intercom, with handset or hands-free to identify an incoming call placed by a caller located outside activating the said identification device, a memory to memorize a list of phone numbers corresponding to possible parties to call, a control terminal (1) to receive the said incoming call and a dialing device (111) activated by the control terminal to establish the communication between the said caller and the phone corresponding to a phone number on the said list of phone numbers,
the said system comprising the said control terminal is a call transfer device including an identification module (112) capable of detecting a specific signal generated by the called party when pressing a push-button corresponding to the said phone number and capable of establishing the communication between the caller and the said called party when the said identification module detects the said specific signal or capable of disconnecting from the called party's phone if the said specific signal is not detected and capable of asking the said dialing device to call the first phone number on the said list of phone numbers or the following phone number on the list.

2. The system of claim 1, wherein the said call signal sent by the called party transmitted by the said caller is a DTMF, Dual Tone Multi Frequency, signal transmitted by the said called party's phone when pressing one of the push-buttons of the phone.

3. The system of claim 1 or 2, wherein the said dialing device (111) is a modem appropriate for a cellular phone network connection, in particular a GSM network.

4. The system of one of the claims 1, 2 or 3, wherein the said call transfer device (1) comprises a user interface (114) which, when activated, enables the transfer of the call to the phone numbers on the said list of phone numbers.

5. The system of claim 4, wherein the said call transfer device (1) comprises a switch (113) capable of switching the said call signal to the said dialing device (111) when the said user interface (114) is activated.

6. The system of one of the claims 1 to 5, wherein the said closed place is, for example, a house and the said identification device (2) is an audio or video intercom, with handset or hands-free or any other equivalent device.

7. The method for transferring a call to a called party located in a closed place by a call transfer system comprising the following steps:
a) the identification of an incoming call placed by a caller located outside of the said closed place using an audio or video intercom, with handset or hands-free,
b) the search by the said call transfer device on a list of phone numbers corresponding to possible parties to call,
c) the call of the phone corresponding to the first phone number of the said list of phone numbers; the said method further comprising the steps of:
d) receiving a specific signal from the said call transfer device generated by the called party when pressing a push-button corresponding to a phone number, and
e) establishing the communication between the said caller and the called party corresponding to the said phone number after the call transfer device has detected the specific signal, and
f) if the said transfer device does not detect the specific signal, the call to the phone number corresponding to the following phone number on the said list of phone numbers and the processing of steps d), e) and f).

## Patentansprüche

1. Ein System für die Anrufweiterschaltung (AWS) an einen gerufenen Teilnehmer, der sich in einem geschlossenen Ort befindet, **gekennzeichnet durch** ein Lesegerät (2) wie eine Audio- oder Video-Türsprechanlage, mit Freisprechtelefon oder Haustelefon, zur Identifikation eines ankommenden Rufs, der von einem rufenden Teilnehmer, der sich draussen befindet, erzeugt wird, indem er das genannte Lesegerät betätigt, einen Speicher zum speichern von einer Liste von Rufnummern möglicher zu rufenden Teilnehmer, ein Endgerät (1) zum Empfang des ankommenden Rufs und ein Anwahlgerät (111), das von dem Endgerät aktiviert wird, um die Kommunikation zwischen dem genannten rufenden Teilnehmer und einer Rufnummer der genannten Liste von Rufnummern herzustellen,
das genannte System **gekennzeichnet dadurch, dass** das genannte Endgerät eine Vermittlungsstelle einschliesslich Identifikationsmodul (112) ist, das dazu geeignet ist, ein spezifisches Signal zu erfassen, das durch den gerufenen Teilnehmer erzeugt wird, wenn er auf eine Taste drückt, die der genannten Rufnummer entspricht, und die Kommunikation zwischen dem rufenden Teilnehmer und dem gennanten gerufenen Teilnehmer herzustellen, wenn das genannte Identifikationsmodul das genannte spezifische Signal erfasst, oder die Verbindung mit dem Telefon des gerufenen Teilnehmers abzubrechen, wenn das genannte spezifische Signal nicht erfasst wird, und zubeantragen, dass das genannte Anwahlgerät die erste Rufnummer der genannten Liste von Rufnummern oder die nächste Rufnummer der Liste anruft.

2. Das System nach Anspruch 1, worin das genannte, vom gerufenen Teilnehmer gesendete und von dem rufenden Teilnehmer übertragene Rufzeichen, ein DTMF, Dual Tone Multi Frequency, Signal ist, das von dem Telefon des genannten gerufenen Teilnehmer übertragen wird, wenn er auf eine der Tasten des genannten Telefons drückt.

3. Das System nach Anspruch 1 oder 2, worin das genannte Anwahlgerät (111) ein Modem ist, das für ein Mobiltelefon Netzwerk, insbesondere für ein GSM-Netzwerk geeignet ist.

4. Das System nach einem der Ansprüche 1, 2 oder 3, worin die genannte Vermittlungsstelle (1) durch eine Benutzerschnittstelle (114) gekennzeichnet ist, die wenn sie aktiviert ist, die Anrufweiterschaltung an die Rufnummern der genannten Liste von Rufnummern ermöglicht.

5. Das System nach Anspruch 4, worin die genannte Vermittlungsstelle (1) **gekennzeichnet ist durch** einen Schalter (113), der dafür geeignet ist, das genannte Rufzeichen zum genannten Anwahlgerät (111) zu schalten, wenn die genannte Benutzerschnittstelle (114) aktiviert ist.

6. Das System nach einem der Ansprüche 1 zu 5, worin der genannte geschlossene Ort zum Beispiel ein Haus und das genannte Lesegerät (2) eine Audio- oder Video-Türsprechanlage, mit Freisprechtelefon oder Haustelefon, oder ein anderes entsprechende Gerät ist.

7. Ein Verfahren für die Anrufweiterschaltung an einen gerufenen Teilnehmer, der sich in einem geschlossenen Ort befindet, durch ein AWS-System, **gekennzeichnet durch** die folgenden Schritte:
a) die Identifikation **durch** eine Audio- oder Video-Türsprechanlage, mit Freisprechtelefon oder Haustelefon, eines ankommendes Rufs, der **durch** einen rufenden Teilnehmer erzeugt wird, der sich ausserhalb des genannten geschlossenen Orts befindet,
b) die Abfrage **durch** die genannte Vermittlungsstelle einer Liste von Rufnummern, die möglichen zu rufenden Teilnehmern entspricht,
c) den Anruf der ersten Rufnummer der genannten Liste von Rufnummern, das genannte Verfahren ausserdem gekenzeichnet **durch** die folgenden Schritte:
d) das Empfangen **durch** die genannte Vermittlungsstelle eines spezifischen Signals, das **durch** den gerufenen Teilnehmer erzeugt wird, wenn er auf eine Taste drückt, die einer Rufnummer entspricht, und
e) die Herstellung einer Kommunikation zwischen dem genannten rufenden Teilnehmer und dem gerufenen Teilnehmer der Rufnummer entsprechend, nachdem die Vermittlungsstelle das spezifische Signal erfasst hat, und
f) falls die genannte Vermittlungsstelle das spezifische Signal nicht erfasst, den Anruf der nächsten Rufnummer der genannten Liste von Rufnummern und den Vorgang nach Schritten d), e) und f).
